Europäisches Patentamt

European Patent Office

Office européen des brevets

(11) Veröffentlichungsnummer: **0 411 353 A1**

# EUROPÄISCHE PATENTANMELDUNG

(21) Anmeldenummer: **90113214.2**

(22) Anmeldetag: **11.07.90**

(51) Int. Cl.5: **B60R 16/02**

(30) Priorität: **29.07.89 DE 3925195**
**23.05.90 DE 4016557**

(43) Veröffentlichungstag der Anmeldung:
**06.02.91 Patentblatt 91/06**

(84) Benannte Vertragsstaaten:
**DE ES FR GB IT SE**

(71) Anmelder: **Iveco Magirus Aktiengesellschaft**
**Schillerstrasse 2 Postfach 27 40**
**D-7900 Ulm/Donau(DE)**

(72) Erfinder: **May, Walter, Dipl.-Ing. (FH)**
**Pfarrer-Imhof-Strasse 14**
**D-7906 Blaustein-Herrlingen(DE)**
Erfinder: **Mall, Wolfgang, Dipl.-Ing. (FH)**
**Hirtenhau 9**
**D-7930 Ehingen(DE)**

(74) Vertreter: **Socha, Peter, Dipl.-Ing.**
**Iveco Magirus AG Patentabteilun0 Postfach**
**27 40 Schillerstrasse 2**
**D-7900 Ulm(DE)**

(54) **Elektronische Steuerzentrale für Nutzfahrzeuge.**

(57)
2.1. Bekannte elektronische Steuerzentralen sind vorwiegend im Kabineninnenraum bzw. im Motorraum vorgesehen. Kabineninnenraum und Motorraum steht als Einbauraum nur begrenzt zur Verfügung. Die Zugänglichkeit zur Steuerzentrale ist erschwert.

2.2. Es wird eine elektronische Steuerzentrale (1) in einem Behälter (2) vorgeschlagen, welcher am Fahrzeugäußeren im Bereich des Fahrerhaus-Einstiegs (3) eines Nutzfahrzeugs am Fahrzeugrahmen oder am Fahrerhaus selbst befestigt ist. Der Behälter der elektronischen Steuerzentrale kann mit dem Fahrerhaus-Einstieg (3) integriert ausgebildet sein.

Fig.1

EP 0 411 353 A1

## ELEKTRONISCHE STEUERZENTRALE FÜR NUTZFAHRZEUGE

Die Erfindung betrifft eine elektronische Steuerzentrale für Nutzfahrzeuge, mit elektrischen und elektronischen Komponenten in einer zusammengefaßten, mit dem Nutzfahrzeug fest verbundenen Anordnung.

Aus DE-OS 36 19 183, DE-PS 37 32 087 und WO 86/06334 sind zusammengefaßte Anordnungen elektrischer und elektronischer Komponenten bei Kraftfahrzeugen, insbesondere bei Personenkraftfahrzeugen, bekannt, welche grundsätzlich im Fahrerhaus-Innenraum bzw. im Motorraum vorgesehen sind. Durch den vermehrten Einsatz elektronischer Bauteile im Kraftfahrzeugbau erhöht sich zwangsläufig die Anzahl der elektronischen Steuergeräte und damit der Bedarf an Einbauraum. Dieser Einbauraum steht im Kabineninneren bzw. im Motorraum nur begrenzt zur Verfügung. Auch die Zugänglichkeit bei einer Montage oder Demontage der Steuerzentrale ist in der Kabine unzureichend. Aus FR-PS 1 093 997 ist eine Aufnahmekonsole für Fahrzeugbatterien bekannt. Auch diese bekannte Konsole befindet sich im Kabineninnern, insbesondere unter dem Fahrersitz, und benötigt ebenfalls entsprechenden Einbauraum.

Aufgabe der Erfindung ist die Schaffung einer elektronischen Steuerzentrale für Nutzfahrzeuge, bei welcher eine größere Anzahl von elektronischen Einzelsteuergeräten zusammengefaßt werden können und welche mit Hilfe einfacher Mittel günstig bei guter Zugänglichkeit am Nutzfahrzeug befestigt werden kann.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 8.

Wesen der Erfindung ist die fahrzeugfeste Befestigung der elektronischen Steuerzentrale in einem Behälter am Fahrzeugäußeren im Bereich des Fahrerhaus-Einstiegs des Nutzfahrzeugs. Dadurch wird der zwischen Einstieg, Fahrzeugrahmen und Fahrerhaus ohnehin vorhandene Freiraum für den Ein- bzw. Anbau der elektronischen Steuerzentrale genutzt, was gleichbedeutend ist mit einem erhöhten Freiraum in der Kabine zwecks Einbau anderer Geräte oder Bedienungselemente. Die elektronische Steuerzentrale ist in einem vorzugsweise geschlossenen Behälter untergebracht und besteht aus den verschiedensten elektronisch geregelten Einrichtungen wie z.B. ABS, ASR, EDC, etc.. Die Anordnung der elektronischen Steuerzentrale im Bereich des Fahrerhaus-Einstiegs erleichtert die Zugänglichkeit zu den einzelnen elektronischen Bausteinen. Zusätzlich wird die Kabelverlegung durch die Möglichkeit der Zusammenfassung zu einem größeren Kabelstrang vereinfacht. Von Vorteil ist ferner die Anordnung der Steuerzentrale in einem Bereich, der bei Betrieb des Nutzfahrzeugs dem Fahrtwind ausgesetzt ist, mithin die elektronischen Bausteine gekühlt werden. Wenn es auch bekannt ist (vgl. US-PS 4 074 786), einen Kotflügeltraktor mit einem verschließbaren Fach dergestalt auszubilden, daß der verschließbare Deckel bei geschlossener Kabinentür des Traktors unter die Tür reicht und dadurch verschlossen ist, so ist ein derartiges Fach vorzugsweise für lose Gegenstände, Werkzeuge od.dgl., oder für eine Fahrzeugbatterie vorgesehen, die von einem Unbefugten möglicherweise leicht demontiert werden kann. Das bekannte verschließbare Fach eignet sich nicht für eine wetterfeste sichere Unterbringung von elektronischen Bauteilen, die ohnehin am Traktor nicht vorhanden sind.

Die elektronische Steuerzentrale ist zweckmäßigerweise hinter dem mit Trittstufen versehenen Fahrerhaus-Einstieg an diesem mittels einer Befestigungsvorrichtung befestigt oder aber in alternativer Ausgestaltung mit dem Einstieg integriert ausgebildet, wobei der Einstieg selbst die vordere Hälfte des Steuerzentralen-Behälters bildet. Eine obere und eine untere Trittstufe zum Fahrzeuginneren sind vorzugsweise verlängert ausgebildet, wobei die Verlängerungen die obere bzw. die untere Behälterwandung der elektronischen Steuerzentrale sind. Die hintere bzw. fahrzeuginnere im wesentlichen vertikale Behälterwand ist vorzugsweise abnehmbar an den vorgenannten Behälterwandungen befestigt.

Auch kann die elektronische Steuerzentrale am seitlichen Fahrerhaus-Unterboden mittels einer Befestigungsvorrichtung befestigt sein. Die Befestigungsvorrichtung umfaßt zweckmäßigerweise Winkelbleche und/oder Konsolen und besitzt elastische Behälterabstützungen, welche bei einem Fahrbetrieb des Nutzfahrzeugs die im Bereich des Einstiegs auftretenden Schwingungen dämpfen und nicht auf die elektronische Steuerzentrale bzw. die einzelnen elektronischen Bausteine übertragen. Der Behälter der elektronischen Steuerzentrale ist wasserfest ausgebildet.

Die Erfindung wird nachfolgend anhand von Ausführungsbeispielen unter Bezugnahme auf die beigefügte schematische Zeichnung näher erläutert; es zeigen:

Fig. 1 eine elektronische Steuerzentrale in einer Vertikalbefestigung an der Innenseite eines Fahrerhaus-Einstiegs in einer Stirnansicht,

Fig. 2 eine Stirnansicht ähnlich Fig. 1 einer anderen Befestigung einer elektronischen Steuerzentrale an einem Fahrerhaus-Einstieg, und

Fig. 3 eine den Fig. 1 und 2 ähnliche Stirnansicht einer Befestigung einer elektronischen Steuerzentrale am Fahrerhaus-Unterboden.

Gemäß Zeichnung ist eine elektronische Steuerzentrale (1) in einem abgeschlossenen wasserdichten Behälter (2) angeordnet und umfaßt eine Anzahl (nicht veranschaulichter) elektrischer und elektronischer Bauteile in einer zusammengefaßten Anordnung. Die einzelnen Komponenten sind mit Kabeln verbunden, die im Bereich des Behälters (2) zu einem großen Kabelstrang zusammengefaßt sind.

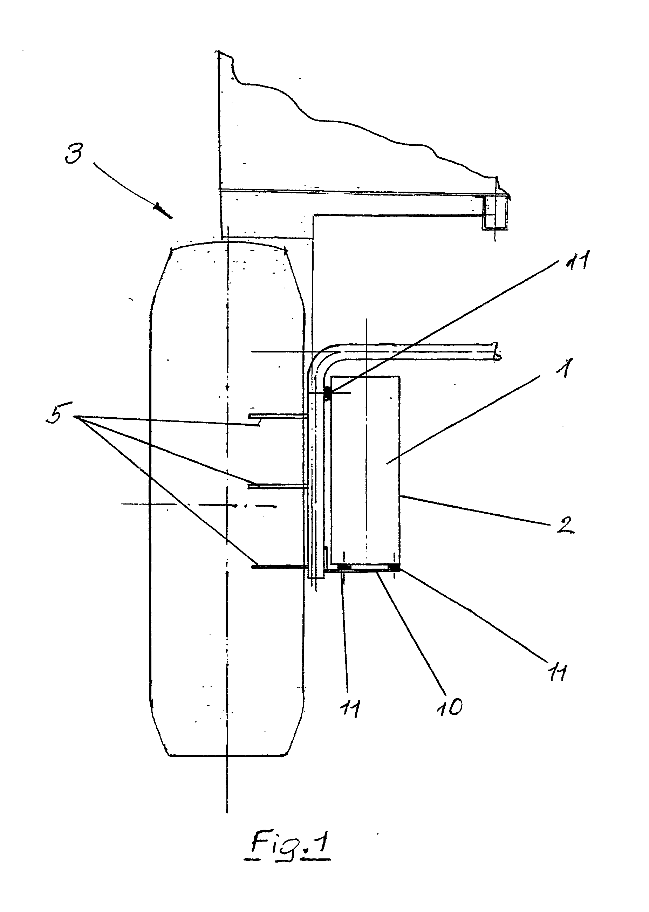

Gemäß Fig. 1 ist die elektronische Steuerzentrale (1) in einem separaten Behälter (2) untergebracht, der an der fahrzeuginneren Seite des Trittstufen (5) enthaltenden Fahrerhaus-Einstiegs (3) befestigt ist. Insbesondere ist eine untere Konsole (10) vorgesehen, die ihrerseits an der Innenseite des Fahrerhaus-Einstiegs (3) befestigt ist. Der Behälter (2) der elektronischen Steuerzentrale (1) ist über elastische Behälterabstützungen (11) mit der unteren Konsole (10) sowie an oberer Stelle mit der Innenseite des Fahrerhaus-Einstiegs (3) verschraubt. Die elastischen Behälterabstützungen (11) sorgen dafür, daß die im Bereich des Einstiegs auftretenden Schwingungen bei einem Fahrzeug-Fahrbetrieb kompensiert und mithin nicht auf die elektronische Steuerzentrale (1) übertragen werden.

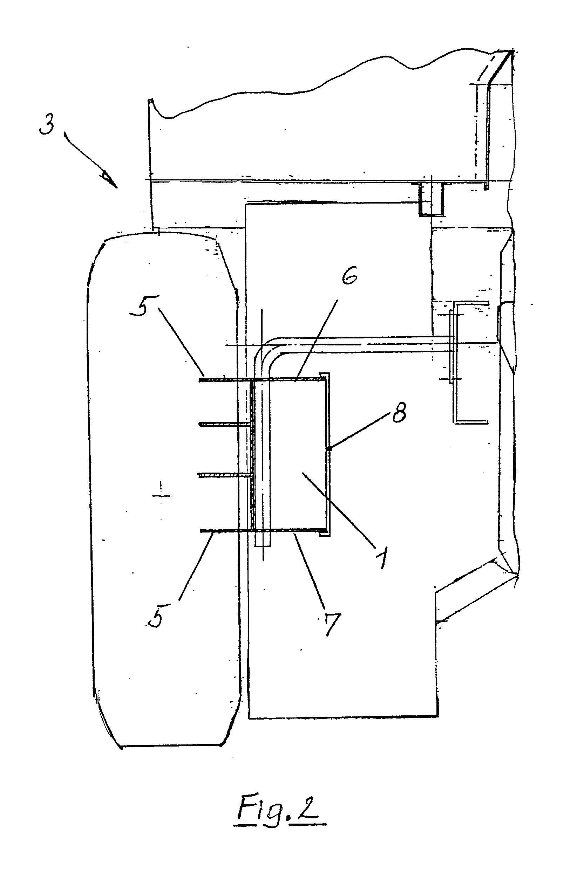

Gemäß Fig. 2 ist die elektronische Steuerzentrale (1) mit dem Fahrerhaus-Einstieg (3) integriert, d.h. nicht mit einem gesonderten Behälter ausgebildet. Der Fahrerhaus-Einstieg (3) wird vorzugsweise aus Kunststoff so gestaltet, daß er selbst die eine (vordere) Hälfte des die elektronische Steuerzentrale (1) aufnehmenden Behälters darstellt. Insbesondere weist der Fahrerhaus-Einstieg (3) eine obere und eine untere Trittstufe (5) auf, die zum Fahrzeuginneren hin verlängert ausgebildet sind, wobei die Verlängerungen selbst die obere Behälterwandung (6) bzw. die untere Behälterwandung (7) bilden. Letztgenannte Behälterwandungen (6, 7) sind durch einen im wesentlichen vertikal angeordneten in Fahrzeuglängsrichtung sich erstreckenden Deckel bzw. eine vertikale Behälterwandung (8) abnehmbar in abgedichteter Weise verschlossen.

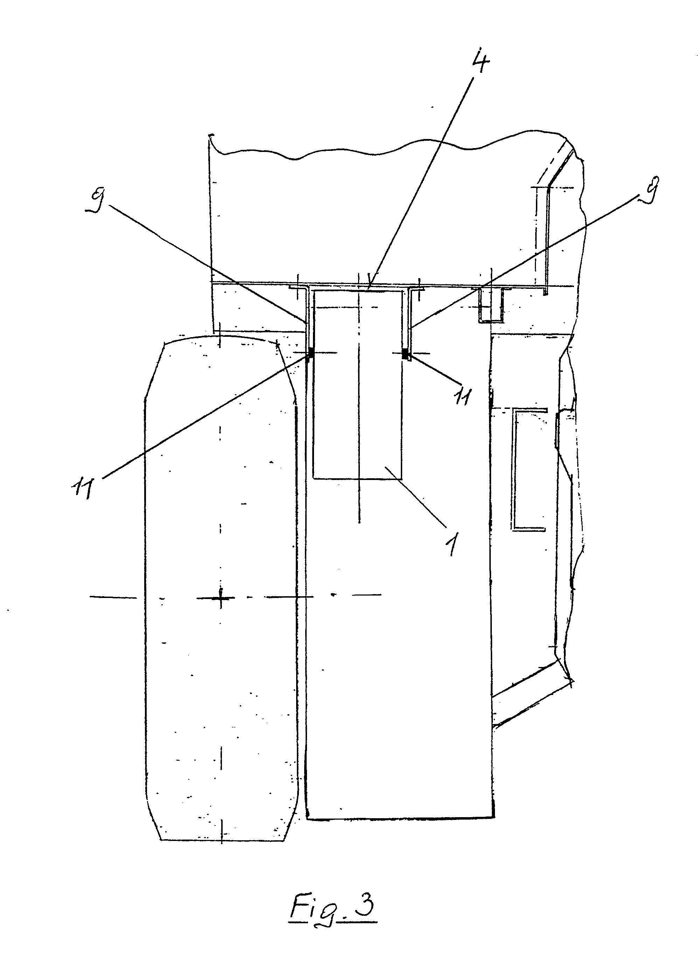

Das in Fig. 3 gezeigte Ausführungsbeispiel einer elektronischen Steuerzentrale sieht einen separaten Behälter (2) für die elektrischen und elektronischen Bauteile vor, wobei der Behälter (2) selbst mittels einer Befestigungs vorrichtung in Form zweier Winkelbleche (9) an der Unterseite des Fahrerhaus-Unterbodens (4) im Bereich des Fahrerhaus-Einstiegs (3) befestigt ist.

Ersichtlich wird durch die Erfindung ein bisher ungenutzter Freiraum im Bereich des Fahrerhaus-Einstiegs (3) für den Einbau einer elektronischen Steuerzentrale ausgenutzt und somit zusätzlicher Freiraum in der Kabine selbst geschaffen. Die Anordnung der elektronischen Steuerzentrale (1) außerhalb des Fahrerhauses erleichtert die Zugänglichkeit zu den einzelnen elektronischen Bausteinen. Bei einem Fahrbetrieb werden die einzelnen Bausteine durch den Fahrtwind gekühlt.

Alle in der Beschreibung erwähnten und/oder in der Zeichnung dargestellten neuen Merkmale allein oder in sinnvoller Kombination sind erfindungswesentlich, auch soweit sie in den Ansprüchen nicht ausdrücklich beansprucht sind.

## Ansprüche

1. Elektronische Steuerzentrale (1) für Nutzfahrzeuge, mit elektrischen und elektronischen Komponenten in einer zusammengefaßten, mit dem Nutzfahrzeug fest verbundenen Anordnung,
dadurch gekennzeichnet,
daß die Steuerzentrale (1) in einem Behälter (2) am Fahrzeugäußeren im Bereich des Fahrerhaus-Einstiegs (3) am Fahrzeugrahmen oder am Fahrerhaus befestigt ist.

2. Steuerzentrale nach Anspruch 1,
dadurch gekennzeichnet,
daß die in einem Behälter (2) angeordnete Steuerzentrale (1) hinter dem mit Trittstufen (5) versehenen Fahrerhaus-Einstieg (3) an diesem mittels einer Befestigungsvorrichtung befestigt ist (Fig. 1).

3. Steuerzentrale nach Anspruch 1,
dadurch gekennzeichnet,
daß die in einem Behälter (2) angeordnete Steuerzentrale (1) am Fahrerhaus-Unterboden (4) mittels einer Befestigungsvorrichtung befestigt ist (Fig. 3).

4. Steuerzentrale nach Anspruch 1,
dadurch gekennzeichnet,
daß die Steuerzentrale (1) mit dem Fahrerhaus-Einstieg (3) integriert ausgebildet ist, wobei der Einstieg selbst zumindest die eine (vordere) Hälfte des Steuerzentralen-Behälters (2) bildet (Fig. 2).

5. Steuerzentrale nach Anspruch 4,
dadurch gekennzeichnet,
daß eine obere und eine untere Trittstufe (5) des Fahrerhaus-Einstiegs (3) zum Fahrzeuginneren verlängert ausgebildet sind und diese Verlängerungen die obere bzw. untere Behälterwandung (6 bzw. 7) bilden.

6. Steuerzentrale nach Anspruch 4 oder 5,
dadurch gekennzeichnet,
daß eine innere abnehmbare im wesentlichen vertikale Behälterwandung (8) vorgesehen ist.

7. Steuerzentrale nach einem der Ansprüche 2 bis 6,
dadurch gekennzeichnet,
daß die Befestigungsvorrichtung Winkelbleche (9) oder eine untere Konsole (10) aufweisen.

8. Steuerzentrale nach einem der Ansprüche 2 bis 7,
dadurch gekennzeichnet,
daß die Befestigungsvorrichtung elastische Behälterabstützungen (11) aufweist.

Fig.1

Fig.2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y,D,A | NN-A-8 606 334 (BOSCH)<br>* Seite 1, Zeile 1 - Seite 3, Zeile 15 * * Seite 3, Zeile 28 - Seite 4, Zeile 11 * * Seite 6, Zeile 5 - Seite 7, Zeile 31 @ Seite 9, Zeilen 8 - 34; Ansprüche 1-6; Figuren 1-5 *<br>— — — | 1-4,6 | B 60 R 16/02 |
| D,Y,D,A | US-A-4 074 786 (JOUBERT)<br>* Spalte 1, Zeilen 39 - 68 * * Spalte 3, Zeile 39 - Spalte 6, Zeile 35; Figuren 1-6 *<br>— — — | 1,2,4,5 | |
| D,Y,D,A | FR-A-1 093 997 (CAMIONS BERNARD)<br>* das ganze Dokument *<br>— — — | 1,3,7 | |
| A | FR-A-1 309 718 (O.M SOCIETA PER AZIONI)<br>* das ganze Dokument *<br>— — — | 1,7 | |
| A | PATENT ABSTRACTS OF JAPAN vol. 6, no. 256 (M-179)(1134) 15 Dezember 1982,<br>& JP-A-57 151450 (TOYO KOGYO K.K) 18 September 1982,<br>* das ganze Dokument *<br>— — — | 7,8 | |
| A | DE-U-7 801 460 (GEBR.CLAAS MASCHINENFABRIK)<br>* das ganze Dokument *<br>— — — — — | 1,3,6-8 | **RECHERCHIERTE SACHGEBIETE (Int. Cl.5)**<br><br>B 60 R |

Der vorliegende Recherchenbericht wurde für alle Patentansprüche erstellt

| Recherchenort | Abschlußdatum der Recherche | Prüfer |
|---|---|---|
| Den Haag | 13 November 90 | GEYER J.L. |